# EUROPÄISCHE PATENTSCHRIFT

(11) **EP 1 108 150 B1**
(45) Veröffentlichungstag und Bekanntmachung des Hinweises auf die Patenterteilung: **21.05.2003**
(21) Anmeldenummer: 99953625.3
(22) Anmeldetag: 27.08.1999
(51) Int. Cl.: F16C 23/04

(54) **MOTOR MIT GLEITLAGER, INSBESONDERE KALOTTENLAGER, FÜR EINE ROTORWELLE MIT AXIALSPIELEINSTELLUNG UND VERFAHREN ZUR EINSTELLUNG DES AXIALSPIELS**
MOTOR WITH A PLAIN BEARING, ESPECIALLY A SPHERICAL BEARING, FOR A ROTOR SHAFT WITH AXIAL PLAY ADJUSTMENT AND METHOD FOR ADJUSTING AXIAL PLAY
MOTEUR A PALIER LISSE, EN PARTICULIER PALIER CONCAVE, POUR UN ARBRE DE ROTOR DOTE D'UN REGLAGE DU JEU AXIAL ET PROCEDE DE REGLAGE DU JEU AXIAL

(30) Priorität: 31.08.1998 DE 19839640
(43) Veröffentlichungstag der Anmeldung: 20.06.2001
(73) Patentinhaber: SIEMENS AKTIENGESELLSCHAFT, 80333 München (DE)
(72) Erfinder: DREXLMAIER, Thomas, D-97076 Würzburg (DE)
(86) Internationale Anmeldenummer: DE9902694
(87) Internationale Veröffentlichungsnummer: WO00012907

(56) Entgegenhaltungen:
- EP-A- 0 592 303
- DD-A- 259 504
- DE-A- 1 613 179
- DE-A- 3 721 757
- FR-A- 1 485 078
- GB-A- 2 016 093
- US-A- 2 912 290
- US-A- 3 770 990
- US-A- 4 806 025

## Beschreibung

Motor mit Gleitlager, insbesondere Kalottenlager, für eine Rotorwelle mit Axialspieleinstellung und Verfahren zur Einstellung des Axialspiels

Die Erfindung bezieht sich auf einen Motor mit Gleitlager, insbesondere Kalottenlager für eine Rotorwelle mit Axialspieleinstellung gemäß Anspruch 1 und ein Verfahren zur Einstellung des Axialspiels gemäß Anspruch 8 bzw. 9.

Insbesondere in einer Massenserienfertigung hergestellte, u.a. statorseitig aus mehreren Bauteilen zusammengesetzte Motoren können ein von Motor zu Motor aufgrund der Toleranzen der einzelnen Bauteile unterschiedliches, mit einer zu großen Streuung behaftetes unzulässiges Axialspiel aufweisen. Dieses Axialspiel muß daher für jeden Motor bei seiner Montage auf ein definiertes zulässiges Maß einstellbar sein.

Ein Motor mit axial in einer Lageraufnahme verstellbaren mittels einer einzigen Klemmbrillen-Halterung in einer Lageraufnahme axial verschieblichen und in seiner Betriebsendstellung mittels einer Verkrallsicherung fixierbaren Kalottenlager ist durch die EP 0 592 303 A1 bekannt; dazu weist die einzige Klemmbrille über ihren Umfang verteilt radiale Finger auf, die einerseits wechselweise nach innen zur umfassenden Halterung des Gleitlagers abgebogen sind bzw. andererseits mit Verkrallenden nach radial außen zur Fixierung der Klemmbrille in der Lageraufnahme abstehen.

Durch die US 3 770 990 A ist weiterhin eine Lageranordnung für eine Welle mit beidseitig je einer Kalotte angeordneter und an dieser anliegender Klemmbrillen-Halterung bekannt, wobei die Kalotte axial zweigeteilt ist und der eine Teil mit der Welle relativ zu dem anderen ruhenden Teil im Sinne eines Radialspielausgleichs verdrehbar ist.

Durch die DD 259 504 A1 ist eine Befestigung von Achsversatz ausgleichenden Gleitlagern in Kunststofflagerschilden derart bekannt, dass das an seiner einen axialen Stirnseite mittels einer in einem Lagerschacht fixierten Druckscheibe in axialer Richtung festgelegte Pendelgleitlager mit seiner anderen axialen Stirnseite gegen eine sphärische Ringfläche des Lagerschildes elastisch vorgespannt angepreßt wird.

Gemäß Aufgabe vorliegender Erfindung soll bei einem als Massenserienprodukt hergestellten Motor eine hinsichtlich Fertigungs- und Montageaufwand vereinfachte Axilspieleinstellung für eine in einem Gleitlager, insbesondere einem Kalottenlager, drehbar gelagerte Rotorwelle bei gewährleisteter optimaler Dämpfung von Axialschwingungen des Rotors und betriebssicherem Einstellsitz eines Gleitlagers, insbesondere einer Kalotte, erreicht werden.

Die Lösung dieser Aufgabe gelingt erfindungsgemäß durch einen Motor mit Gleitlager, insbesondere Kalottenlager, für eine Rotorwelle mit Axialspieleinstellung gemäß Patentanspruch 1 sowie durch ein Verfahren zur Einstellung des Axialspiels gemäß Patentanspruch 8 bzw.9; vorteilhafte Ausgestaltungen des Motors sind Gegenstand der Ansprüche 2 bis 7; Anspruch 10 kennzeichnet eine vorteilhafte Ausgestaltung des Verfahrens gemäß Anspruch 8 bzw.9.

Der erfindungsgemäße Motor erlaubt unter Verwendung einfachster, handelsüblicher Klemmbrillen durch axiales Verschieben der ersten Klemmbrillen-Halterung bei seiner Montage eine einfache Axialspieleinstellung mit Überbrückung auch größerer Axialverstellwege bei gleichzeitig optimaler Axialschwingungsdämpfung ohne Gefahr einer Loslagerhalterung des Gleitlagers, insbesondere der Kalotte, aufgrund der unabhängig von der ersten Klemmbrillen-Halterung in ihrer Federcharakteristik gezielt auslegbaren und dabei ebenfalls einfach montierbaren zweiten Klemmbrillen-Halterung. In fertigungstechnisch besonders einfacher Weise besteht jede Klemmbrillen-Halterung aus jeweils einer Klemmbrille mit radial äußerem geschlossenen Klemmrand und davon nach radial innen abstehenden, an dem Gleitlager zur Anlage kommenden Fingern.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: in einem Axialschnitt einen Kommutatormotor mit über ein Lagerschild am rechten axialen Ende eines Motorgehäuses gehalterte Lageraufnahme mit einer erfindungsgemäßen Klemmbrillen-Halterung für ein Gleitlager, insbesondere Kalottenlager;
- FIG 2: eine Anordnung gemäß FIG 1, bei der jedoch die Lageraufnahme Teil eines das Motorgehäuse aufnehmenden Adapters ist;
- FIG 3: eine rotorabgewandte axiale Draufsicht auf die erste Klemmbrillen-Halterung größerer Federsteifigkeit;
- FIG 4: eine rotorseitige axiale Draufsicht auf die zweite Klemmbrillen-Halterung geringerer Federsteifigkeit;
- FIG 5: eine axiale Ansicht der beiden Klemmbrillen-Halterungen gemäß FIG 3;4.

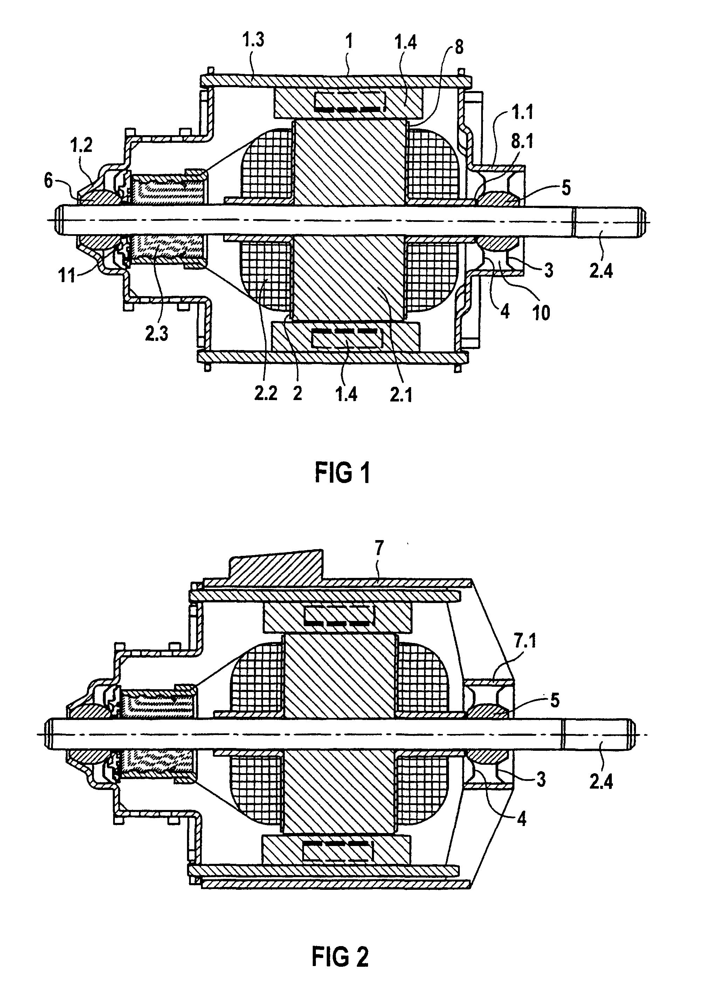

FIG 1 zeigt im Axialschnitt einen dauermagneterregten Kommutatormotor, der z.B. zum Antrieb von Lüftergebläsen in Kraftfahrzeugen Anwendung finden kann. Der Stator 1 weist am Innenumfang eines Motorgehäuses 1.3 der Permanenterregung dienende Magnetschalen 1.4 sowie jeweils axial endseitig am Motorgehäuse 1.3 befestigte Lageraufnahmen 1.1 bzw.1.2 auf. Der Rotor 2 umfaßt im wesentlichen ein auf einer Rotorwelle 2.4 gehaltertes Rotorpaket 2.1 mit einer Wicklung 2.2, die an einen Kommutator 2.3 angeschlossen ist, der über hier nicht dargestellte Bürsten beschliffen wird. Die Rotorwelle 2.4 ist in einem rechten Gleitlager 5, insbesondere einer Kalotte, an der AS-Seite des Motors und in einem linken Gleitlager 6, insbesondere einer Kalotte, an der BS-Seite des Motors drehbar gelagert. Die linke Kalotte ist in üblicher Weise durch eine Klemmbrille 11 an ihrem einen axialen Ende gegen die hier pfannenförmig ausgebildete feste Lageraufnahme 1.2 angedrückt.

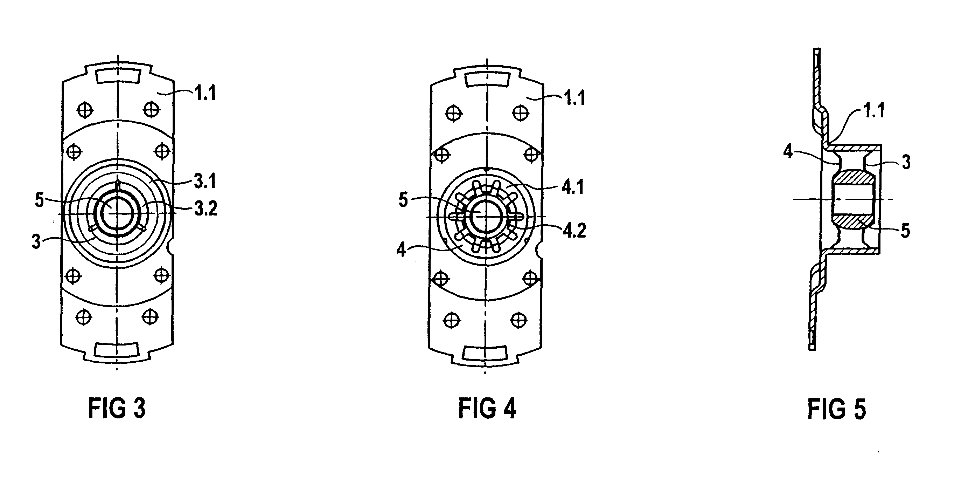

Die rechte Kalotte ist erfindungsgemäß in der in diesem Bereich zylindrisch ausgebildeten Lageraufnahme 1.1 über eine erste, im Bereich ihres rechten axialen Endes aufliegende Klemmbrillen-Halterung 3 und über eine zweite im Bereich ihres linken axialen Endes aufliegende Klemmbrillen-Halterung 4 axial einstellbar gehaltert. Die beiden Klemmbrillen-Halterungen 3 bzw.4 unterscheiden sich deutlich in ihrer jeweiligen Federcharakteristik. Die axial außenliegende erste Klemmbrillen-Halterung 3 weist eine steil verlaufende Federkennlinie auf, die axial innenliegende zweite Klemmbrillen-Halterung weist eine flach verlaufende Federkennlinie auf. Die unterschiedliche Federcharakteristik kann - wie insbesondere aus den Einzelteildarstellungen gemäß FIG 3 bzw. FIG 4 ersichtlich - bei einer vorzugsweise mit radial äußerem Klemmrand 3.1;4.1 und daran angeformten radial inneren Fingern 3.2;4.2 ausgebildeten Klemmbrille durch die Anzahl bzw. Ausgestaltung der Finger erreicht werden; dementsprechend zeigen die Klemmbrillen-Halterung 3 gemäß FIG 3 entsprechend ihrer relativ hohen Steifigkeit nur wenige, hier insgesamt drei, Finger 3.2 mit entsprechender kurzer Einschlitzung des zum äußeren Klemmrand 3.1 radial inneren Fingerbereiches und die zweite Klemmbrillen-Halterung 4 gemäß FIG 4 entsprechend ihrer relativ weichen Federcharakteristik insgesamt zehn schmalere und durch größere und tiefere Einschlitzung aus der einstückigen Klemmbrillen geformte Finger 4.2.

Das jeweils gewünschte, z.B. durch einen axialen Anschlagweg zwischen der linken Stirnfläche des Gleitlagers 5 einerseits und der gegenüberliegenden Stirnfläche 8.1 einer rotorpaketfesten Isolierendscheibe 8 definierte Axialspiel wird mittels der rechten ersten Klemmbrillen-Halterung 3 durch deren entsprechendes axiales Eintauchen in die Lageraufnahme 1.1 bestimmt. Dabei kann die Kalotte mit ihrem linken axialen Ende die Finger 4.2 der mit einer flachverlaufenden Federkennlinie ausgebildeten linken zweiten Klemmbrillen-Halterung 4 mehr oder weniger federnd auslenken, wobei die linke zweite Klemmbrillen-Halterung 4 beim axialen Verschieben der Kalotte während einer Axialspieleinstellung mittels der rechten ersten Klemmbrillen-Halterung 3 in ihrer vormontierten eingestellten axialen Position fixiert bleibt. Es wird in vorteilhafter Weise die flachverlaufende Federcharakteristik der innenliegenden zweiten Klemmbrillen-Halterung 4 unter anderem dazu genutzt, eine einerseits verdrehungssichere jedoch andererseits zum Ausgleich von Fluchtungsfehlern einstellbare Kalottenaufnahme in der Lageraufnahme 1.1 sicherzustellen.

Durch die federnd anliegenden Finger 4.2 der axial innenliegenden zweiten Klemmbrillen-Halterung 4 wird die Kalotte in ihrer Betriebsendstellung jeweils gegen die axial außenliegende erste Klemmbrillen-Halterung 3 angedrückt, deren Finger 3.2 aufgrund der steilen Federkennlinie praktisch axial nicht ausweichen. Die Federkennlinie der axial innenliegenden zweiten Klemmbrillen-Halterung 4 reicht also nicht dazu aus, die axial außenliegende erste Klemmbrillen-Halterung 3 zu überdrücken; zweckmäßigerweise ist die Federkennlinie der äußeren ersten Klemmbrillen-Halterung 3 jedoch derart ausgelegt, daß sie trotzdem Axialbelastungen der Rotorwelle, z.B. aufgrund eines starken magnetischen axialen Zuges bzw. stärkerer axialer mechanischer Stoßbelastungen ebenso wie die axial innenliegende zweite Klemmbrillen-Halterung 4 in Gegenrichtung abdämpfend auffangen kann.

Zur erfindungsgemäß besonders einfachen Axialspieleinstellung mittels der zwei, in ihrer Federkennlinie gezielt unterschiedlich ausgebildeten Klemmbrillen-Halterungen 3 bzw.4 wird zweckmäßigerweise die axial innenliegende zweite Klemmbrillen-Halterung 4 in ihrer Betriebsendstellung in der Lageraufnahme 1.1 vormontiert. Nach dem Anbringen der Lageraufnahme 1.1 an dem bereits in seiner Bohrung mit dem Rotor bestückten Stator 1 werden dann die Kalotte und die axial äußere erste Klemmbrillen-Halterung 3 eingeschoben und bei Einstellung eines definierten Axialspiels in ihre Betriebsendstellung gebracht. Nach einer weiteren Ausgestaltung der Erfindung ist neben der Vormontage der axial innenliegenden zweiten Klemmbrillen-Halterung 3 bereits auch eine Vormontage der Kalotte und der axial äußeren ersten Klemmbrillen-Halterung 3 in der Lageraufnahme 1.1 möglich, derart daß nach der Fixierung der Lageraufnahme 1.1 am Stator 1 mit vorheriger Positionierung des Rotors 2 in der Lagerbohrung des Stators 1 die Kalotte und die axial äußere erste Klemmbrillen-Halterung 3 im Sinne eines definierten Axialspiels in die Lageraufnahme 1.1 von außen gut zugänglich weiter eindrückbar sind.

Vorteilhaft sind die Klemmbrillen-Halterungen 3;4 bei Erreichen ihrer Betriebsendstellungen, insbesondere selbsttätig durch eine Verkrallsicherung, über ihren Klemmrand 3.1 bzw. 4.1 in der Lageraufnahme 1.1 fixierbar; dazu ist der Klemmrand 3.1 bzw.4.1 - wie insbesondere aus dem Schnittbild gemäß FIG 5 ersichtlich - im Sinne einer Verkrallsicherung entgegen der Einschubrichtung ausgebildet.

Beim Ausführungsbeispiel gemäß FIG 2 ist in insbesondere für eine Vormontage der erfindungsgemäßen Klemmbrillen-Halterung vorteilhafter Weise die Lageraufnahme 7.1 für die Kalotte und die Klemmbrillen-Halterungen 3 bzw.4 integriertes Teil eines den Motor umschließend aufnehmenden Adapters 7, mittels dessen der Motor auf einfache Weise in einer Halterung, z.B. eines Kraftfahrzeug-Lüfteraggregates, einbaubar ist.

Die im Ausführungsbeispiel nur am AS-Rotorwellenende angenommene erfindungsgemäße Klemmbrillen-Halterung kann selbstverständlich auch gleichzeitig am BS-Rotorwellenende vorgesehen sein.

## Patentansprüche

1. Motor mit Gleitlager, insbesondere Kalottenlager, für eine Rotorwelle mit Axialspieleinstellung
- mit einer ersten Klemmbrillen-Halterung (3) an der einen axialen Seite des Gleitlagers (5) und mit einer zweiten Klemmbrillen-Halterung (4) an der anderen axialen Stirnseite des Gleitlagers (5)
- mit zueinander unterschiedlichen Federsteifigkeiten der Klemmbrillen-Halterungen (3 bzw.4), wobei
- die Klemmbrillen-Halterungen (3 bzw.4) unabhängig voneinander jeweils axial in einer Lageraufnahme (1.1;7.1) des Kalottenlagers in eine Betriebsendlage verschiebbar und in dieser fixierbar sind,
- die erste Klemmbrillen-Halterung (3) größerer Federsteifigkeit zur Einstellung des Axialspiels zwischen der in dem Gleitlager (5) gelagerten Rotorwelle (2.4) einerseits und dem Stator (1) des Motors andererseits im Bereich des einen axialen Endes des Gleitlagers (5) anliegt,
- die zweite Klemmbrillen-Halterung (4) geringerer Federsteifigkeit zum elastischen Andruck des Gleitlagers (5) gegen die erste Klemmbrillen-Halterung im Bereich des anderen axialen Endes des Gleitlagers (5) anliegt.

2. Motor nach nnspruch 1
- mit einer Anordnung der ersten Klemmbrillen-Halterung (3) im Bereich des axial äußeren Endes des Gleitlagers (5);
- mit einer Anordnung der zweiten Klemmbrillen-Halterung (4) im Bereich des axial inneren Endes des Gleitlagers (5).

3. Motor nach Anspruch 1 und/oder 2
- mit einer Ausbildung der Klemmbrillen-Halterungen (3;4) mit jeweils einem radial äußeren geschlossenen Klemmrand (3.1;4.1) und davon nach radial innen abstehenden, an dem Gleitlager (5) zur Anlage kommenden Fingern (3.2;4.2) ;
- mit einer unterschiedlichen Federsteifigkeit der ersten bzw. der zweiten Klemmbrillen-Halterung (3 bzw.4) durch entsprechende Zahl und/oder Ausbildung der jeweiligen Finger (3.2;4.2).

4. Motor nach zumindest einem der Ansprüche 1 bis 3
- mit einer Fixierung der ersten bzw. zweiten Klemmbrillen-Halterung (3 bzw.4) in ihrer jeweiligen Betriebsendstellung durch Verkrallsicherung in der Lageraufnahme (1.1;7.1) in Gegenrichtung zu dem Gleitlager (5).

5. Motor nach zumindest einem der Ansprüche 1 bis 4
- mit einer Ausbildung der Lageraufnahme (1.1) als Teil eines mit dem Motorgehäuse (1) verbundenen Lagerbügels.

6. Motor nach zumindest einem der Ansprüche 1 bis 4
- mit einer Ausbildung der Lageraufnahme (7.1) als Teil eines den Motor aufnehmenden, insbesondere das Motorgehäuse (1) umfassenden, Adapters (7).

7. Motor nach zumindest einem der Ansprüche 1 bis 6
- mit einem Schmiermittel-Depotraum (10) zwischen den axial beidseitig an dem Gleitlager (5) anliegenden Klemmbrillen-Halterunge (3 bzw.4).

8. Verfahren zur Axialspieleinstellung bei einem Motor nach zumindest einem der Ansprüche 1 bis 7 mit u.a. folgenden Verfahrensschritten:
- der Rotor (2) wird relativ zu dem Motorgehäuse (1.3) in Position gebracht;
- die Lageraufnahme (1.1;7.1)wird mit vom axial inneren Ende bis in ihre Betriebsendstellung eingeschobener und in dieser fixierter zweiten Klemmbrillen-Halterung (4) relativ zum Motorgehäuse fixiert;
- vom axial äußeren Ende der Lageraufnahme (1.1;7.1) her wird das Gleitlager (5), insbesondere die Kalotte, axial eingeschoben;

9. Verfahren zur Axialspieleinstellung bei einem Motor nach zumindest einem der Ansprüche 1 bis 7 mit u.a. folgenden Verfahrensschritten:
- der Rotor (2) wird relativ zu dem Motorgehäuse (1.1) in Position gebracht;
- die Lageraufnahme (1.1;7.1)wird mit vom axial inneren Ende bis in ihre Betriebsendstellung eingeschobener und in dieser fixierter zweiten Klemmbrillen-Halterung (4) und mit vom axial äußeren Ende eingeschobenem Gleitlager (5) und mit in eine Vormontage-Stellung eingeschobener erster Klemmbrillen-Halterung (3) relativ zum Motorgehäuse fixiert;
- vom axial äußeren Ende der Lageraufnahme (1.1;7.1) her wird die erste Klemmbrillen-Halterung (3) im Sinne einer definierten Axialspieleinstellung bis in eine entsprechende Betriebsendstellung axial weitergeschoben und in dieser fixiert.
- vom axial äußeren Ende der Lageraufnahme (1.1;7.1) her wird die erste Klemmbrillen-Halterung (3) im Sinne einer definierten Axialspieleinstellung bis in eine entsprechende Betriebsendstellung axial eingeschoben und in dieser fixiert.

10. Verfahren nach Anspruch 8 und/oder 9
- die axial äußere erste Klemmbrillen-Halterung (3) wird im Sinne einer Positionierung ohne wesentlichen Axialdruck gegen das Gleitlager (5) angelegt;
- die axial innere zweite Klemmbrillen-Halterung (4) wird im Sinne einer federnden betriebssicheren Anlage des Gleitlagers (5) an der ersten Klemmbrillen-Halterung (3) angedrückt.

## Claims

1. Engine with sliding bearings, in particular spherical cap bearings, for a rotor shaft with axial play adjustment
- with a first clamp mounting (3) on the one axial face of the sliding bearing (5) and with a second clamp mounting (4) on the other axial front face of the sliding bearing (5)
- with the clamp mountings (3 or 4) having different spring stiffness values, with
- the clamp mountings (3 or 4) being such that they can be moved independently of each other, in each instance axially in a bearing seat (1.1; 7.1) of the spherical cap bearing into an operating end position and can be fixed in this,
- the first clamp mounting (3) of greater spring stiffness being positioned close to the one axial end of the sliding bearing (5) to adjust the axial play between the rotor shaft (2.4) held in the sliding bearing (5) on the one hand and the stator (1) of the engine on the other hand,
- the second clamp bearing (4) of lesser spring stiffness being positioned close to the other axial end of the sliding bearing (5) to hold the sliding bearing (5) in elastic fashion against the first clamp bearing.

2. Engine according to Claim 1,
- with an arrangement of the first clamp mounting (3) near to the axially outer end of the sliding bearing (5);
- with an arrangement of the second clamp bearing (4) near to the axially inner end of the sliding bearing (5).

3. Engine according to Claim 1 and/or 2
- with each of the clamp mountings (3; 4) configured to have a radially outer closed clamping edge (3.1; 4.1) and fingers (3.2; 4.2) at a radially inward position from these in contact with the sliding bearing (5);
- with the first and second clamp mountings (3 and 4) having a different spring stiffness due to the corresponding number and/or configuration of the respective fingers (3.2; 4.2)

4. Engine according to at least one of Claims 1 to 3
- with the first or second clamp mounting (3 or 4) fixed in its respective operating end position by a claw washer in the bearing seat (1.1; 7.1) operating counter to the sliding bearing (5).

5. Engine according to at least one of Claims 1 to 4
- with the bearing seat (1.1) configured as part of a bearing clip connected to the engine housing (1).

6. Engine according to at least one of Claims 1 to 4
- with the bearing seat (7.1) configured as part of an adapter (7) holding the engine, and in particular comprising the engine housing (1).

7. Engine according to at least one of Claims 1 to 6
- with a lubricant depository (10) between the clamp mountings (3 or 4) in contact on both sides axially with the sliding beating (5).

8. Method for adjusting axial play in an engine according to at least one of Claims 1 to 7 including the following stages:
- the rotor (2) is moved into position in relation to the engine housing (1.3);
- the bearing seat (1.1; 7.1) is fixed in relation to the engine housing with the second clamp mounting (4) pushed from the axially inner end into its operating end position and fixed in this;
- the sliding bearing (5), in particular the spherical cap, is pushed axially from the axially outer end of the bearing seat (1.1; 7.1);
- the first clamp mounting (3) is pushed axially from the axially outer end of the bearing seat (1.1; 7.1) in the sense of a defined axial play adjustment into a corresponding operating end position and fixed in this.

9. Method for adjusting axial play in an engine according to at least one of Claims 1 to 7 including the following stages:
- the rotor (2) is moved into position in relation to the engine housing (1.1);
- the bearing seat (1.1; 7.1) is fixed in relation to the engine housing with the second clamp mounting (4) pushed from the axially inner end into its operating end position and fixed in this and with the sliding bearing (5) pushed from the axially outer end and with the first clamp mounting (3) pushed into a pre-assembly position;
- the first clamp mounting (3) is pushed further axially from the axially outer end of the bearing seat (1.1; 7.1) in the sense of a defined axial play adjustment into a corresponding operating end position and fixed in this.

10. Method according to Claim 8 and/or 9
- the axially outer first clamp mounting (3) is moved against the sliding bearing (5) in the sense of positioning without significant axial pressure;
- the axially inner second clamp mounting (4) is held against the first clamp mounting (3) in the sense of a springy reliable contact on the part of the sliding. bearing (5).

## Revendications

1. Moteur avec palier à glissement, en particulier palier à calotte, pour un arbre de rotor avec réglage de jeu axial
- comprenant un premier support (3) pour lunette de serrage situé sur l'une des faces axiales du palier à glissement (5) et un deuxième support (4) pour lunette de serrage situé sur l'autre face axiale du palier à glissement (5),
- les supports (3 et 4) pour lunette de serrage ayant des rigidités élastiques différant de l'un à l'autre,
- les supports (3 et 4) pour lunette de serrage étant chacun, indépendamment l'un de l'autre, mobiles axialement dans un logement de palier (1.1; 7.1) du palier à calotte dans une position finale de fonctionnement et pouvant être fixés dans cette dernière,
- le premier support (3) pour lunette de serrage, de plus grande rigidité élastique, se trouvant, en vue du réglage du jeu axial, entre l'arbre de rotor (2.4) logé dans le palier à glissement (5), d'une part, et le stator (1) du moteur, d'autre part, dans la zone de l'une des extrémités axiales du palier à glissement (5),
- le deuxième support (4) pour lunette de serrage, de plus faible rigidité élastique, se trouvant, en vue de presser élastiquement le palier à glissement (5) contre le premier support pour lunette de serrage, dans la zone de l'autre extrémité axiale du palier à glissement (5).

2. Moteur selon la revendication 1
- le premier support (3) pour lunette de serrage étant disposé dans la zone de l'extrémité axialement extérieure du palier à glissement (5);
- le deuxième support (4) pour lunette de serrage étant disposé dans la zone de l'extrémité axialement intérieure du palier à glissement (5).

3. Moteur selon la revendication 1 ou 2
- les supports (3;4) de lunette de serrage étant réalisés avec respectivement un rebord de serrage (3.1; 4.1) fermé disposé radialement à extérieur et des doigts (3.2; 4.2) qui, partant dudit rebord, s'étendent radialement vers l'intérieur pour s'appuyer sur le palier à glissement (5);
- le premier et le deuxième support (3 et 4) pour lunette de serrage ayant une rigidité élastique différente, grâce à un nombre et/ou une réalisation correspondant des doigts respectifs (3.2; 4.2).

4. Moteur selon l'une des revendications 1 à 3
- comprenant un dispositif de fixation des premier et deuxième supports (3 et 4) pour lunette de serrage dans leurs positions finales de fonctionnement respectives au moyen d'une fixation à crampons dans le logement de palier (1.1; 7.1), en sens contraire du palier à glissement (5).

5. Moteur selon au moins l'une des revendications 1 à 4
- le logement de palier (1.1) étant réalisé en tant que partie d'une bride de palier liée au carter de moteur (1).

6. Moteur selon au moins l'une des revendications 1 à 4
- le de palier (7.1) étant réalisé en tant que partie d'un adaptateur (7) recevant le moteur et comportant en particulier le carter de moteur (1).

7. Moteur selon au moins l'une des revendications 1 à 6
- comprenant une chambre de dépôt pour lubrifiant (10) située entre les supports (3 et 4) pour lunette de serrage qui reposent axialement des deux côtés contre le palier à glissement (5).

8. Procédé permettant de régler le jeu axial d'un moteur selon au moins l'use des revendications 1 à 7 comportant, entre autres, les étapes opératoires suivantes:
- le rotor (2) est positionné par rapport au carter de moteur (1.3);
- le logement de palier (1.1; 7.1) est fixé par rapport au carter de moteur avec le deuxième support (4) pour lunette de serrage qui est inséré à partir de l'extrémité axialement intérieure jusqu'à sa position finale de fonctionnement et est fixé dans cette dernière;
- à partir de l'extrémité axialement extérieure du logement de palier (1.1; 7.1), le palier à glissement (5), en particulier la calotte, est inséré de manière axiale;
à partir de l'extrémité axialement extérieure du logement de palier (1:1; 7.1), le premier support (3) pour lunette de serrage est inséré axialement, en vue de réaliser un réglage de jeu axial défini, jusqu'à une position finale de fonctionnement appropriée et est fixé dans cette dernière.

9. Procédé permettant de régler le jeu axial d'un moteur selon au moins l'une des revendications 1 à 7 comportant, entre autres, les étapes opératoires suivantes :
- le rotor (2) est positionné par rapport au carter de moteur (1.1);
- le logement de palier (1.1; 7.1) est fixé par rapport au carter de moteur avec le deuxième support (4) pour lunette de serrage inséré à partir de l'extrémité axialement intérieure jusqu'à sa position finale de fonctionnement et fixé dans cette dernière, avec le palier à glissement (5) inséré à partir de l'extrémité axialement extérieure, et avec le premier support (3) pour lunette de serrage inséré dans une position de prémontage;
- à partir de l'extrémité axialement extérieure du logement de palier (1.1; 7.1), le premier support (3) pour lunette de serrage est inséré axialement, en vue de réaliser un réglage de jeu axial défini, jusqu'à une position finale de fonctionnement appropriée et est fixé dans cette dernière.

10. Procédé selon la revendication 8 ou 9
- le premier support (3) pour lunette ds serrage situé axialement à l'extérieur est placé contre le palier à glissement (5), de façon à réaliser un positionnement sans pression axiale significative;
- le deuxième support (4) pour lunette de serrage situé axialement à l'intérieur est pressé contre le premier support (3) pour lunette de serrage, de façon à réaliser un dispositif élastique de fonctionnement sûr du palier à glissement (5).
